# FASCICULE DE BREVET EUROPEEN

(11) **EP 3 318 856 B1**
(45) Date de publication et mention de la délivrance du brevet: **17.02.2021**
(21) Numéro de dépôt: 17200506.8
(22) Date de dépôt: 08.11.2017
(51) Int. Cl.: G01K 1/02, F24D 19/10, G01K 17/10

(54) **VANNE AUTOMATIQUE POUR RADIATEUR À EAU CHAUDE, ET SYSTÈME DE GESTION AUTOMATISÉE DE CHARGES DE CHAUFFAGE UTILISANT CETTE VANNE**
AUTOMATISCHES VENTIL FÜR WARMWASSER-HEIZKÖRPER; UND SYSTEM ZUR AUTOMATISCHEN STEUERUNG DER HEIZLASTEN DURCH VERWENDUNG DIESES VENTILS
AUTOMATIC VALVE FOR HOT WATER HEATER, AND SYSTEM FOR AUTOMATED MANAGEMENT OF HEATING LOADS USING THE SAME

(30) Priorité: 08.11.2016 FR 1660794
(43) Date de publication de la demande: 09.05.2018
(73) Titulaire: Regulation France, 69150 Decines-Charpieu (FR)
(72) Inventeur: LORINI, Marcel, 69126 BRINDAS (FR)
(74) Mandataire: Schmidt, Martin Peter

(56) Documents cités:
- EP-A1- 2 479 505
- WO-A1-2010/146003
- CN-A- 104 833 447
- DE-A1- 3 012 267
- FR-A1- 3 017 978

## Description

### Domaine technique de l'invention

L'invention est relative aux installations de chauffage ou de refroidissement à liquide caloporteur. Elle concerne plus particulièrement le domaine des systèmes de contrôle d'un circuit de liquide caloporteur pour le chauffage ou le refroidissement d'au moins un local. Elle concerne également le domaine des systèmes et méthodes de répartition des frais de chauffage au sein d'un immeuble ou d'un groupe d'immeubles.

### Etat de la technique

On connaît de très nombreux systèmes de régulation du débit et/ou de la température d'un radiateur à eau chaude. Le système le plus répandu dans les systèmes de chauffage domestique est la vanne thermostatique. On connaît également des vannes thermostatiques capables de communiquer sans fil avec un thermostat d'ambiance, et qui comprennent un moyen de régulation automatique du débit d'eau ; ces vannes peuvent être autoalimentées. De telles vannes autoalimentées sont commercialisées par les sociétés Micropelt (modèle MVA-002), Spartan (série ME 8400) et Damalist (référence DA12243).

On connaît également de très nombreuses méthodes pour mesurer la consommation en chauffage d'un radiateur à eau chaude au sein d'un ensemble de radiateurs agencés dans un logement comprenant plusieurs radiateurs, ou dans un immeuble comprenant plusieurs logements équipés chacun d'au moins un radiateur.

A titre d'exemple, on cite ici les documents WO 97/22863 (Brunata Holding), WO 99/23455 (Humlum Energy Consulting), DE 100 57 834 (Ingo Brauns), WO 2002/35154 (Alfa Laval), WO 03/006924 and WO 03/007264 (Horst Ziegler), WO 2004/072 596 (Qundis Siemens), DE 10 2004 020292 (Danfoss), EP 1 630 533 (Actaris), DE 10 2004 055659 (Metrona), WO 2007/053 091 (Kyab Lulea), WO 2008/039065 (Kamstrup), EP 1 918 649 et WO 2014/183 917 (Bosch), EP 1 936290 and EP 1 936 288 (Techem), EP 1 975 583 (Landis), EP 2 072 982 (Kundo System Technik Qundis), EP 2 072 957 (Qundis), FR 2 931 226 (Acome), WO 2010/0146003 (Luigi Bonetti), DE 10 2009 030 828, EP 2 309 238 et EP 2312 289 (Qundis), DE 10 2010 033 683 (H.H. Koerner), DE 10 2010 052 104 (Hydrometer), WO 2012/074478 (Ecofective), EP 2 479 505 (Grundfos), EP 2 541 157 (Itron), EP 2 746 742 (Aquametro), DE 10 2014 011 311 (Liu Zhen), FR 3 017 978 (CEA), DE 10 2014 002 855 (Kellendonk Elektronik), DE 20 2014 101 863 (Halstrup Walcher), WO 2016/005 023 (Diehl Metering), DE 20 2015 005 283 (IAD), US 6,960,017 (Sandia), EP 2 743 661 (Cherepnin), WO 2012/162 763) (Southco).

La demanderesse s'est rendu compte qu'en vertu d'une nouvelle réglementation (en France : le décret 2012-545) concernant la répartition des frais de chauffage dans les immeubles collectifs chauffés par des radiateurs à circulation d'eau chaude, la facturation doit se faire en fonction de la consommation réelle et non plus en répartition en fonction de la surface habitée. Cela nécessitera d'équiper un grand nombre d'immeubles de dispositifs permettant d'atteindre ce but imposé par la législation. On peut imaginer de placer ces dispositifs au niveau d'une unité de logement (appartement) ou au niveau d'un radiateur individuel au sein d'une unité de logement. En tout état de cause, cela nécessitera un investissement matériel pour acquérir ces dispositifs, une intervention technique pour les installer dans les unités de logement, ainsi qu'un service de relevé et de traitement des données générées par ces dispositifs en vue de facturer l'énergie de chauffage réellement consommée.

Il serait désirable de minimiser l'impact et le coût de chacun de ces trois facteurs : investissement, service d'installation, service de relevé et de traitement des données.

Un problème supplémentaire, qui complique singulièrement l'atteinte de ces buts, réside dans le fait que dans les immeubles anciens, la distribution de l'eau chaude pour chauffage se fait soit par boucles horizontales (c'est-à-dire au sein d'un même étage), soit par boucles verticales disposées dans des colonnes montantes. Si dans le premier cas il peut être possible de procéder à une détermination de la consommation par unité d'habitation (appartement), en posant un compteur d'énergie thermique à l'entrée de l'appartement, dans le second cas cela est impossible car un même circuit de chauffage dessert plusieurs logements situés sur des étages différents : deux pièces contiguës peuvent être chauffées par un circuit de chauffage différent.

Il serait donc désirable de disposer d'un système qui peut être utilisé dans le deux cas géométriques de distribution. La présente invention cherche à proposer un tel système.

### Figures

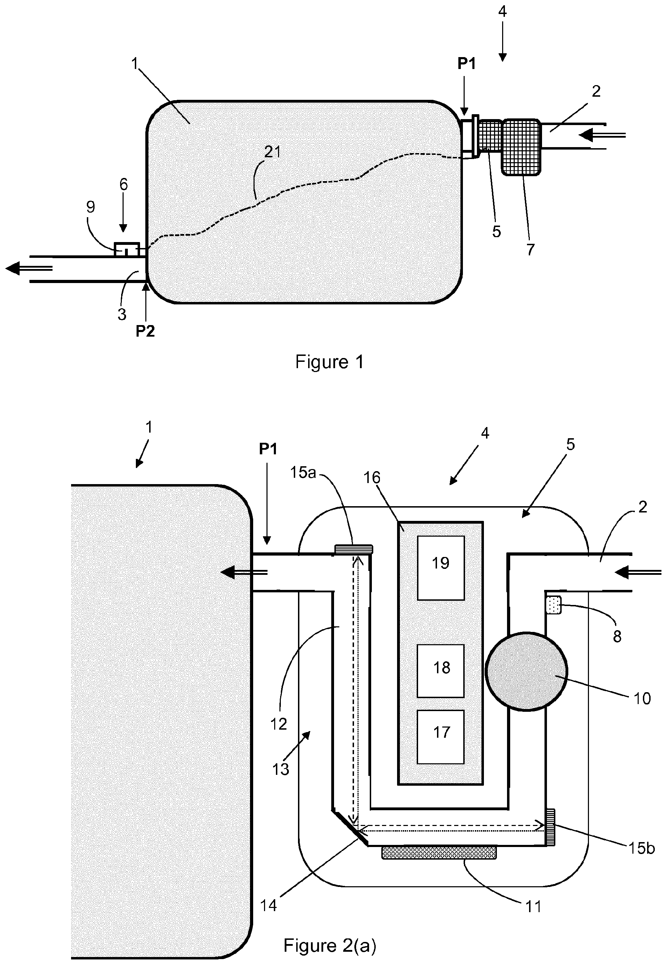

Les figures 1 à 3 illustrent les principes de l'invention ou certains de ces modes de réalisation ; elles ne limitent pas la portée de l'invention.

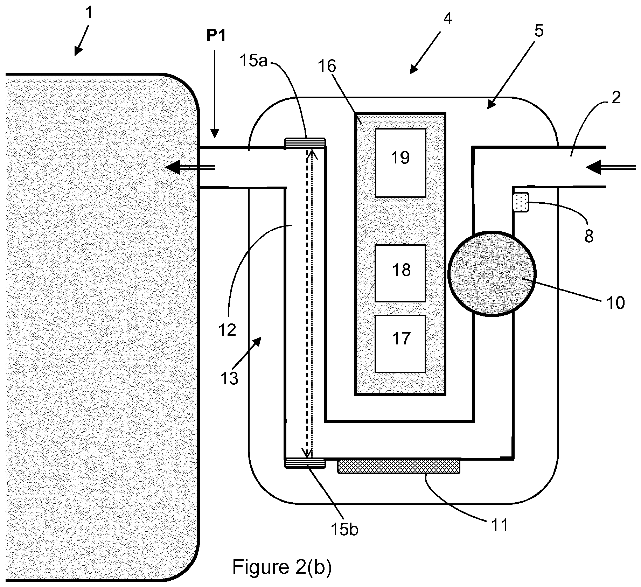

Les figures 1 et 2 montrent de manière schématique un radiateur de type courant, équipé du système de détermination individuelle de la consommation énergétique et de régulation thermique individuelle d'un échangeur de chaleur selon l'invention. La figure 2 montre de manière schématique la structure du dispositif de mesure et de régulation de débit contenu dans la première unité, selon deux modes de réalisation différents (figures 2(a) et 2(b).

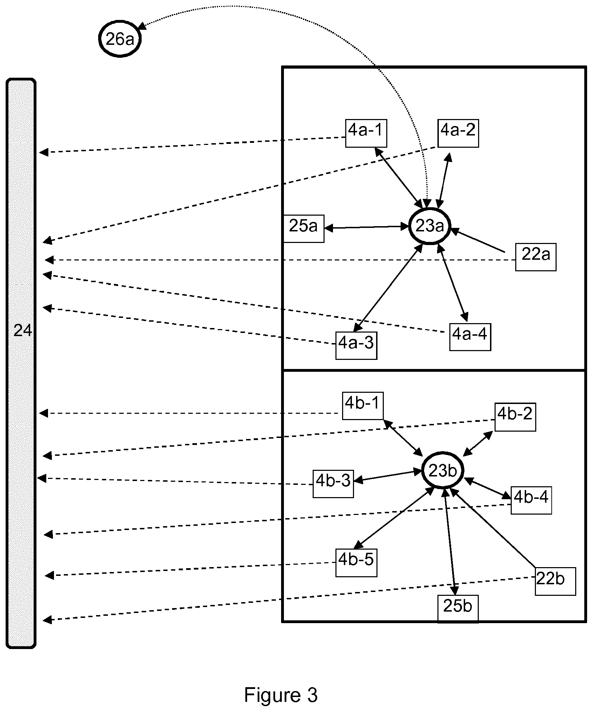

La figure 3 montre de manière schématique un premier mode de réalisation d'un système radioélectrique selon l'invention, qui intègre plusieurs systèmes de détermination individuelle de la consommation énergétique et de régulation thermique individuelle d'un échangeur de chaleur selon l'invention, dans deux unités d'occupation.

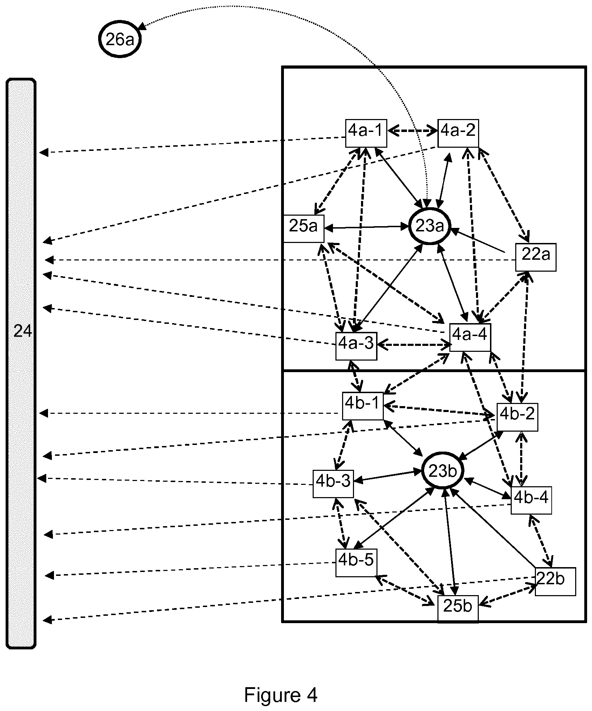

La figure 4 montre de manière schématique un deuxième mode de réalisation d'un système radioélectrique selon l'invention, qui se distingue de celui de la figure 3 par le fait que les différents systèmes de détermination individuelle de la consommation énergétique et de régulation thermique individuelle sont configurés et capables de se transmettre des données par une voie de transmission de signal sans fils à courte portée, tel que le WiFi.

Les repères suivants sont utilisés sur les figures et dans la description :

| | | | |
|---|---|---|---|
| 1 | Echangeur de chaleur | 14 | Miroir |
| 2 | Entrée de fluide caloporteur | 15 | Emetteur-récepteur d'ultrasons |
| 3 | Sortie de fluide caloporteur | 16 | Carte électronique |
| 4 | Dispositif de mesure et de régulation | 17 | Mémoire |
| 5 | Première unité | 18 | Microprocesseur |
| 6 | Deuxième unité | 19 | Premier émetteur-récepteur radioélectrique |
| 7 | Troisième unité | | |
| 8 | Première sonde de température | 21 | Liaison filaire |
| 9 | Deuxième sonde de température | 22 | Dispositif de mesure d'eau chaude |
| 10 | Vanne motorisée | 23 | Boitier de gestion locale |
| 11 | Unité d'alimentation par effet Seebeck | 24 | Centrale de gestion des données |
| 12 | Conduit de fluide caloporteur | 25 | Caméra de porte |
| 13 | Débitmètre | 26 | Téléphone portable |

### Description

La demanderesse s'est rendu compte qu'une voie pour atteindre le but recherché est de déterminer la consommation pour chaque radiateur individuellement. Mais c'est aussi la voie qui implique le plus grand nombre de dispositifs à installer, et potentiellement un coût significatif. La demanderesse a donc cherché à simplifier au maximum le dispositif et son exploitation, et à permettre d'ajouter des fonctions additionnelles intéressantes pour l'utilisateur (occupant des locaux chauffés) et/ou l'exploitant du système de chauffage ou de l'immeuble.

D'une manière générale, pour connaitre la consommation réelle d'un échangeur de chaleur (tel qu'un radiateur), il faut connaitre l'échange calorique que l'échangeur de chaleur a eu avec l'ambiance pendant un temps donné.

Selon l'invention on mesure la température d'entrée du fluide caloporteur dans l'échangeur de chaleur, la température de sortie du fluide de l'échangeur de chaleur, et enfin le volume de fluide qui a transité pendant un temps donné. A partir de ces informations, on calcule la quantité d'énergie (typiquement en unité de calories ou de Joule) échangée, ce qui permet d'établir avec certitude la consommation énergétique réelle par échangeur de chaleur, en vue de la facturation de cette consommation énergétique.
L'invention peut s'appliquer de la même manière aux échangeurs de chaleurs dans lesquels le fluide caloporteur est plus chaud que la température ambiante (appelés radiateurs), et aux échangeurs de chaleurs dans lesquels le fluide caloporteur est plus froid que la température ambiante. Dans ce qui suit l'invention est décrite surtout en relation avec les radiateurs, car ils représentent le cas le plus fréquent ; cela ne limite cependant pas la portée de l'invention.

La présente invention est applicable aux installations de chauffage et/ou de refroidissement comprenant une pluralité d'échangeurs de chaleur **1** (tels que des radiateurs) traversés par un flux d'un fluide caloporteur (tel que l'eau), qui entre dans ledit échangeur de chaleur par une entrée **2,** et qui le quitte par une sortie **3,** un organe de régulation du débit **10** dudit fluide caloporteur (tel qu'une vanne) étant prévu à l'entrée **2** dudit échangeur de chaleur **1.** Selon l'invention, ledit organe de régulation **10** est intégré dans un dispositif de mesure et de régulation de débit **4.** Ce dernier dispose d'un système d'alimentation électrique **11** indépendant du réseau électrique externe.
Ledit fluide caloporteur peut être un liquide chaud, qui est chauffé de manière connue par un système de chauffage central qui est appelé ici de manière générique une « chaudière », indépendamment du mode de génération de chaleur (qui peut impliquer notamment un chauffage par combustion et/ou par géothermie et/ou par pompe à chaleur et/ou par le captage du rayonnement solaire et ou par résistance électrique). Ledit fluide caloporteur peut être un fluide froid, qui est refroidi par un système de refroidissement central quelconque. Une telle chaudière alimente plusieurs unités d'occupation, et avantageusement au moins un immeuble ou groupe d'immeubles. Dans un mode de réalisation avantageux les échangeurs de chaleur **1** faisant partie du réseau radioélectrique selon l'invention sont alimentés en liquide caloporteur par une seule chaudière centrale à combustion, à laquelle peuvent s'ajouter des capteurs de rayonnement solaire décentralisés ou d'autres sources de chaleur.
Le système de détermination individuelle de la consommation énergétique et de régulation thermique individuelle d'un échangeur de chaleur **1** destiné à être monté sur un circuit de liquide caloporteur, notamment pour radiateur à eau chaude, selon l'invention comprend :
- un dispositif de mesure et de régulation de débit **4** comprenant:
   ∘ un organe **10** de régulation de débit dudit fluide caloporteur, qui comprend un système mécanique de régulation de débit (tel qu'une vanne) et un système de commande dudit système de régulation pouvant être actionné automatiquement (tel qu'un moteur de type pas à pas) ou manuellement (tel qu'une bague de réglage) ;
   ∘ un dispositif de mesure de débit **13,** qui peut être un débitmètre à ultrasons ou à turbine, le débitmètre à ultrasons étant préféré ;
   ∘ une première sonde de température **8** mesurant la température du fluide caloporteur à l'entrée **2** de l'échangeur de chaleur **1,**
- une unité électronique, comprenant
   ∘ un microprocesseur **18,** qui est en liaison fonctionnelle avec une unité de mémoire **17,**
   ∘ un premier émetteur-récepteur radioélectrique **19,** capable de communiquer avec une centrale de gestion de données **24,** ledit premier émetteur-récepteur radioélectrique **19** étant en liaison fonctionnelle avec ledit microprocesseur **18,**
      le microprocesseur **18,** l'unité de mémoire **17** et ledit premier émetteur-récepteur 19 étant typiquement disposés sur une carte électronique **16** ;
- un système d'alimentation électrique **11** indépendant du réseau électrique externe, qui alimente au moins ledit dispositif de mesure et de régulation de débit, s'il a besoin d'une telle alimentation, et ledit premier émetteur-récepteur radioélectrique, qui peut être une batterie primaire ou secondaire, et/ou une alimentation électrique autonome, telle qu'une turbine ou une photopile ou un dispositif à effet thermoélectrique (effet Seebeck) (ce dernier étant préféré) ;
- une deuxième sonde de température **9** mesurant la température du fluide caloporteur à la sortie **3** de l'échangeur de chaleur **1,** configurée pour transmettre des données de température au microprocesseur, sachant que :
   - ledit dispositif de mesure et de régulation de débit **4** est disposé dans une première unité **5,** destinée à être montée sur le circuit de fluide caloporteur en un premier point P1 ;
   - ladite deuxième sonde **9** de température est disposée dans une seconde unité **6,** destinée à être montée sur le même circuit de fluide caloporteur en un second point P2, situé en aval dudit premier point P1 ;
   - ladite deuxième sonde **9** de température communique avec ledit microprocesseur **18** soit par un système sans fil, par l'intermédiaire d'un émetteur radioélectrique (typiquement un deuxième émetteur radioélectrique dédié à cette fonction) qui communique avec un récepteur situé dans la seconde unité **6,** soit par une liaison filaire **21** ;
   - ledit système d'alimentation électrique **11** indépendant du réseau électrique externe est disposé dans la seconde unité **6** (dans ce cas une liaison filaire **21** est prévue qui permet d'alimenter aussi la première unité **5** et, si présente, la troisième unité **7**) ou, de manière préférée, dans la première **5** unité ;
- ledit premier émetteur-récepteur **19** radioélectrique et ledit microprocesseur **18** étant disposés dans la première unité **5** ou dans une troisième unité **7** qui se fixe sur ladite première unité **5,** ou encore dans ladite seconde unité **6** (dans ce dernier cas la communication entre la première et la deuxième unité se fait par une liaison filaire **21** qui comporte également le fil d'alimentation de la deuxième sonde de température **9**) ;
- ledit système alimentation électrique **11** indépendant du réseau électrique externe alimente au moins ledit dispositif de mesure et de régulation **4** de débit (s'il a besoin d'une telle alimentation) et ledit premier émetteur-récepteur **19** ;
- Le point P1 est situé à l'entrée **2** dudit échangeur de chaleur 1, et le point P2 est situé à la sortie **3** dudit échangeur de chaleur **1.**

Le dispositif de régulation de débit **10** comprend un système mécanique de régulation de débit, et un système de commande dudit système de régulation. Ledit système mécanique de régulation de débit peut être une vanne de type courant, convenant aux fluides caloporteurs habituellement utilisés (notamment l'eau).

Ledit dispositif de régulation de débit **10** peut être une vanne thermostatique de type courant ; ces vannes comprennent une sonde de température ou un bulbe thermostatique (par exemple une poche de gaz), un système de commande (poignée ou bague de réglage pour fixer le point de consigne) en liaison mécanique avec une tige de transmission au bout de laquelle se trouve le clapet capable de modifier, en coopération avec un logement de forme adaptée, la section d'écoulement du fluide caloporteur. On peut utiliser une vanne à boisseau sphérique ou à boisseau cylindrique accouplé à un diaphragme, ce dernier étant dimensionné pour avoir le débit désiré en fonction de l'ouverture.

Dans un mode de réalisation avantageux le système de commande est actionné automatiquement, notamment par un moteur de type pas à pas qui agit, directement ou par l'intermédiaire d'une bague de réglage, sur ladite tige de transmission. On peut utiliser une électrovanne appropriée de type courant.

Le dispositif de mesure de débit **13** peut être un débitmètre de type connu, de préférence un débitmètre qui mesure la vitesse du fluide. A ce titre, on peut utiliser un débitmètre à turbine, ou un débitmètre à ultrasons. On préfère le débitmètre à ultrasons car il n'engendre pas de perte de charge. La demanderesse s'est rendu compte que la perte de charge, même faible, d'une turbine, peut devenir significative dans un immeuble équipé de plusieurs centaines de dispositifs de mesure et de régulation de débit selon l'invention, au point de nécessiter possiblement le remplacement de la pompe de circulation du système de chauffage central par un modèle plus puissant, ou d'accélérer l'usure de ladite pompe de circulation. Un autre inconvénient des turbines est le risque d'encrassement par des particules métalliques présentes dans le fluide caloporteur, qui sont attirées par les aimants du générateur électrique à turbine qui génère le signal électrique représentatif du débit de liquide caloporteur.

La figure 2(a) montre de manière schématique une coupe à travers un dispositif **4** de mesure et de régulation de débit selon un premier mode de réalisation particulier de l'invention. Ledit dispositif **4** est disposé dans une première unité **5.** Il est traversé par un conduit de flux caloporteur **12** en « U » avec un embout d'entrée **2** horizontal et un embout de sortie également horizontal, ce dernier étant monté sur l'échangeur de chaleur **1.** Une carte électronique **16** comporte le microprocesseur **18** qui est en liaison fonctionnelle avec son unité de mémoire **17** et avec l'émetteur-récepteur **19.** Ledit microprocesseur **18** commande également le fonctionnement de la vanne motorisée **10.** L'unité d'alimentation **11** par effet thermoélectrique (effet Seebeck) alimente l'ensemble des composants électriques et électroniques du système de détermination individuelle de la consommation énergétique et de régulation thermique individuelle d'un échangeur de chaleur ; la figure 2 ne montre pas la deuxième unité avec notamment la deuxième sonde de température.

La première sonde de température **8** envoie ses données de température vers le microprocesseur **18.** Le débitmètre à ultrasons **13** comporte deux émetteurs-récepteurs d'ultrasons **15a,15b** et un miroir **14** sur lequel les ondes ultrasons émanant de l'un des émetteurs **15a ou 15b** sont renvoyés vers l'autre récepteur **15b ou 15a.** Le flux de fluide caloporteur induisant une vitesse du milieu dans lequel se propagent les ondes ultrasons qui s'additionne à la vitesse de propagation des ondes ultrasons, les ondes parcourent la même distance dans un temps différent pour les trajets aller et retour (symbolisés par les deux types de flèches sur la figure 2). Les émetteurs-récepteurs **15a,15b** d'ultrasons sont en liaison fonctionnelle avec le microprocesseur **18,** et ce dernier est configuré pour déterminer à partir de cette différence de temps le débit du fluide caloporteur, en prenant en compte la section du conduit **12.**

Dans un deuxième mode de réalisation particulier montré sur la figure 2(b), le débitmètre à ultrasons comporte deux émetteurs-récepteurs **15a,15b** positionnés face à face, chacun recevant les ondes émises par l'autre ; cela rend le dispositif plus robuste, et en particulier insensible à l'encrassement des miroirs.

Bien évidemment, dans les figures 2, la direction du flux de liquide caloporteur peut être inversée.

Selon l'invention le système d'alimentation électrique **11** doit être indépendant du réseau électrique externe, car cela simplifie de manière significative la conception et la fabrication du dispositif de mesure et de régulation de débit **4** ainsi que son installation. Ledit système d'alimentation électrique **11** peut être une batterie primaire, mais on préfère un système d'alimentation électrique autonome, car l'épuisement de la batterie primaire peut perturber le fonctionnement continu du système, et le remplacement de la batterie primaire doit être géré.

On peut utiliser un système d'alimentation autonome par turbine, mais un tel système engendre une perte de charge qui n'est pas souhaitable ainsi qu'un risque d'encrassement, comme cela a été expliqué ci-dessus en relation avec le débitmètre à turbine. On peut utiliser une photopile, de préférence associée à une batterie secondaire (i.e. rechargeable), mais un tel système peut montrer un dysfonctionnement en cas de manque prolongé d'exposition à la lumière. Le système d'alimentation électrique autonome préféré est un dispositif à effet thermoélectrique qui exploite l'effet Seebeck; de tels systèmes existent dans le commerce. On a par exemple utilisé le module Peltier Tec1-12705.

Ladite deuxième sonde de température **9** est située dans la seconde unité **6.** Elle mesure la température du fluide caloporteur en sortie **3** de l'échangeur de chaleur **1.** Elle est configurée pour transmettre des données de température au microprocesseur **18** qui est situé dans la première unité **5** ou dans une troisième unité **7.** Cette transmission peut se faire sans fil, par une voie radioélectrique. Cela suppose que ladite seconde unité **6** soit munie d'un deuxième émetteur radioélectrique (non montrés sur les figures) et d'un système d'alimentation électrique indépendant du réseau électrique externe capable d'alimenter en électricité ledit deuxième émetteur radioélectrique. Dans un souci de simplicité on préfère une liaison filaire **21** entre la deuxième unité **6** et la première unité **5** (ou la troisième unité **7** si présente) qui évite d'équiper la seconde unité **6** d'un émetteur radioélectrique et d'un système d'alimentation électrique indépendant. Dans de nombreux cas la liaison filaire **21** peut être disposée derrière le radiateur **1,** de manière invisible pour l'utilisateur.

Lesdites sondes de température **8,9** peuvent être des sondes à résistance en platine, par exemple de type Pt100, connues de l'homme du métier.

Le système de détermination individuelle de la consommation énergétique et de régulation thermique individuelle d'un échangeur de chaleur selon l'invention est conçu pour être intégré dans un système radioélectrique de relevé et de gestion automatisé des charges de chauffage, qui forme un autre objet de la présente invention.

Cette intégration se fait à au moins deux niveaux. Le premier niveau correspond à une unité d'occupation des lieux chauffés et/ou refroidis par au moins un échangeur de chaleur équipé dudit système de mesure et de régulation de débit ; cette « unité d'occupation » peut être un logement, ou une unité de locaux occupés dans d'autres but (tels que bureaux, magasin, zone de passage) ; c'est une première unité de comptabilisation des charges de chauffage et/ou de refroidissement. Le deuxième niveau correspond à une unité de bâtiment (immeuble) ou de groupe de bâtiments comprenant une pluralité d'unités d'occupation ; cette unité de bâtiment ou de groupe de bâtiments est appelée ici « unité de gestion centralisée ».

L'unité de gestion centralisée correspond le plus souvent au périmètre fonctionnel d'une chaudière ou d'un autre moyen centralisé de génération de chaleur (ou de froid) qui dessert ladite pluralité d'unités d'occupation en fluide chaud et/ou froid. Dans le cadre d'un chauffage par eau chaude acheminée par un réseau de chaleur urbain l'unité de gestion centralisée de chaleur peut être un immeuble ou un groupe d'immeubles voisins desservis par le même réseau. Dans ces deux cas il est avantageux qu'une unité de gestion centralisée de chaleur corresponde à un seul immeuble, et en cas de besoin il est possible de prévoir un troisième niveau d'intégration qui regroupe plusieurs immeubles situés proches l'un de l'autre.

Le but de l'invention est de permettre, au sein d'une unité de gestion centralisée, de déterminer ou comptabiliser pour chaque unité d'occupation des lieux la consommation réelle en énergie thermique échangée dans les échangeurs de chaleur installés au sein de ladite unité d'occupation, afin de permettre la facturation de ladite consommation réelle à l'occupant ou l'exploitant de chaque unité d'occupation. Cette consommation en énergie thermique est une consommation cumulée sur une certaine durée, qui peut être le trimestre, le mois, la semaine, le jour, en fonction des besoins de facturation et éventuellement des besoins de prévision des ressources thermiques (combustible) nécessaires à court terme.

Selon l'invention, tous les systèmes de détermination individuelle de la consommation énergétique et de régulation thermique individuelle d'un échangeur de chaleur installés dans une même unité d'occupation sont configurés pour communiquer avec une centrale de gestion de données appelée « boîtier de gestion locale » **23,** cette communication étant de préférence bidirectionnelle, et tous les boitiers de gestion locale installés dans une même unité de gestion centralisée sont configurés pour communiquer avec un dispositif appelle « centrale de gestion de données » **24,** cette communication étant de préférence également bidirectionnelle.

Cet ensemble de systèmes de détermination individuelle de la consommation énergétique et de régulation thermique individuelle d'un échangeur de chaleur, avec leurs boitiers de gestion locale **23a,b** et leur centrale de gestion de données **24,** forment un réseau radioélectrique, qui est un autre objet de l'invention. Dans ce réseau, chaque dispositif de mesure et de régulation **4** (i.e. chaque échangeur de chaleur **1** individuel) possède sa propre adresse d'identification qui accompagne avantageusement toutes les informations relatives à la consommation énergétique qu'il transmet ; cela est illustré de manière schématique sur la figure 3 qui sera expliquée plus en détail ci-dessous.

Dans un mode de réalisation préféré, chaque dispositif de mesure et de régulation **4** (i.e. chaque échangeur de chaleur **1** individuel) est configuré pour transmettre à la centrale de gestion de données ses données relatives à la consommation énergétique, et possiblement également ses données relatives à la température relevée par la première **8** et la deuxième **9** sonde de température. Cette transmission de données entre les dispositifs de mesure et de régulation **4** et la centrale de gestion de données peut se faire avantageusement par la technologie connue sous le sigle LoRa, comme cela sera expliqué ci-dessous. D'autres technologies peuvent être utilisées, telles que la modulation par déplacement de fréquence (FSK, « Frequency-Shift Keying ») ou la modulation par décalage de phase (PSK, « Phase Shift-Keying), et en particulier en utilisant les fréquences des bandes ISM ; ces technologies sont développées en Europe par la société Sigfox.

Par ailleurs, chaque dispositif de mesure et de régulation **4** (i.e. chaque échangeur de chaleur **1** individuel) est configuré pour transmettre à son boitier de gestion locale les données de température, et il reçoit dudit boitier de gestion locale des instructions susceptibles d'agir sur son organe de régulation du débit **10.** Cette transmission de données peut se faire avantageusement par la technologie connue sous le sigle WiFi ou par d'autres technologies, comme cela sera expliqué ci-dessous.

Dans un mode de réalisation, chaque système de détermination individuelle de la consommation énergétique et de régulation thermique individuelle d'un échangeur de chaleur est configuré pour communiquer à sa centrale de gestion de données **24,** pour un intervalle de temps donné, des données représentant le débit d'eau chaude au point P1 et la température de l'eau mesurée aux points P1 et P2 ou la différence de température de l'eau aux points P1 et P2. Cette communication peut se faire à des intervalles réguliers, et/ou lorsque la centrale de gestion émet une requête, et/ou encore lorsque la différence de température aux points P1 et P2 dépasse une certaine valeur ; dans une variante elle peut être désactivée lorsque le débit est nul.

Dans un autre mode de réalisation, qui est préféré, le microprocesseur **18** de chaque dispositif de mesure et de régulation de débit est configuré pour enregistrer les des données représentant le débit d'eau chaude au point P1 et la température de l'eau mesurée aux points P1 et P2 ou la différence de température de l'eau aux points P1 et P2, et/ou pour déterminer à partir de ces données une donnée synthétique représentant la consommation cumulée dudit échangeur de chaleur. Ces données ou de cette donnée synthétique sont (est) ensuite transmis(es) à la centrale de gestion de données **24,** à des intervalles réguliers (par exemple une fois par jour) ou sur requête émanant de la centrale de gestion de données **24.**

En ce qui concerne la communication entre les systèmes de détermination individuelle de la consommation énergétique et de régulation thermique individuelle d'un échangeur de chaleur et son boitier de gestion locale **23,** on note que dans un mode de réalisation, chaque système de détermination individuelle de la consommation énergétique et de régulation thermique individuelle d'un échangeur de chaleur communique à son boitier de gestion locale, pour un intervalle de temps donné, des données représentant le débit d'eau chaude au point P1 et la température de l'eau mesurée aux points P1 et P2 ou la différence de température de l'eau aux points P1 et P2. Cette communication peut se faire à des intervalles réguliers, et/ou lorsque le boitier de gestion locale **23** émet une requête, et/ou encore lorsque la différence de température aux points P1 et P2 dépasse une certaine valeur ; dans une variante elle peut être désactivée lorsque le débit est nul. Dans un autre mode de réalisation, le microprocesseur **18** de chaque dispositif de mesure et de régulation de débit est configuré pour enregistrer les des données représentant le débit d'eau chaude au point P1 et la température de l'eau mesurée aux points P1 et P2 ou la différence de température de l'eau aux points P1 et P2, et/ou pour déterminer à partir de ces données une donnée synthétique représentant la consommation cumulée dudit échangeur de chaleur, comme cela a été décrit ci-dessus. Ces données ou de cette donnée synthétique sont (est) ensuite transmis(es) au boitier de gestion locale, à des intervalles réguliers (par exemple une fois par jour) ou sur requête émanant du boitier de gestion locale **23.**

Dans une variante applicable à chacun de ces deux modes de réalisation, chaque boitier de gestion locale **23** est configuré pour envoyer à chaque dispositif **4** de mesure et de régulation de débit une température de consigne, qui est transposé par le microprocesseur **18** en une commande du système automatique de régulation agissant sur le dispositif de régulation de débit **10,** conduisant à une modification du débit de fluide caloporteur.

Le système radioélectrique selon l'invention peut comprendre en plus, dans au moins une unité d'occupation (et préférentiellement pour toutes les unités d'occupation) au moins un système de mesure de la consommation d'eau sanitaire **22,** ledit système comprenant un débitmètre sur le circuit chaud, avec sa sonde de température, et un débitmètre sur le circuit froid, avec sa sonde de température, ce système étant relié, avec ou sans fil, à un émetteur qui communique avec la centrale de gestion de données **24** et possiblement aussi avec le boitier de gestion locale **23.**

Lesdits débitmètres sur les circuits d'eau sanitaire **22** peuvent être à ultrasons ou à turbine, sachant que dans le dernier cas la perte de charge engendrée par la turbine est beaucoup moins problématique que pour le circuit de chauffage. Par ailleurs, une turbine peut servir également pour l'alimentation électrique de l'émetteur et son électronique de pilotage, sachant que l'alimentation par un dispositif à effet thermoélectrique peut poser un problème de fiabilité sur les circuits d'eau sanitaire à cause de la différence de température trop faible et trop variable.

Dans une variante du système radioélectrique selon l'invention, au moins un des boitiers de gestion locale **23** (et de préférence tous les boitiers de gestion locales) sont configurés de manière à permettre à une personne habilitée (par exemple l'occupant de l'unité d'habitation en question) de programmer le profil thermique (température de consigne pur chaque intervalle de temps) de chaque système de mesure et de régulation de débit relevant dudit boitier de gestion locale, ou de modifier de manière ponctuelle sa température de consigne. Le boitier de gestion locale **23** peut être configuré de manière à permettre cette programmation du boitier de gestion locale à distance, par exemple par l'internet ou par téléphone portable **26,** ou à l'aide d'un émetteur radioélectrique dédié. Alternativement ou de manière supplémentaire, le système radioélectrique selon l'invention peut être configuré de manière à permettre à ce que l'intervention par la personne habilitée qui vient d'être décrite puisse être effectué par une communication sans fil entre la personne habilitée et la centrale de gestion des données **24,** qui ensuite utilise le canal de communication bidirectionnel prévu (ou un autre canal de communication spécifiquement prévu) pour relayer l'information de programmation au boitier de gestion locale **23** concernée, sur laquelle porte l'habilitation de ladite personne habilitée.

La communication entre chaque système de mesure et de régulation de débit et la centrale de gestion de données **24** (et, si présent, entre chaque système de mesure de la consommation d'eau sanitaire **22** et la centrale de gestion de données **24**), peut se faire par tout moyen de communication sans fil approprié, et en utilisant tout protocole de communication approprié. Par exemple, les protocoles de communication connus sous le nom « Wifi », les protocoles connus sous le nom éthernet, les liaisons sans fil à faible consommation énergétique (tel que le système connu sous le sigle « LoRa ») peuvent convenir. On préfère des technologies à faible consommation de courant.

A titre d'exemple, on a utilisé le système LoRa de la société Semtech en mode bidirectionnel avec une démodulation du signal à ± 30 kHz, à une fréquence de 868 MHz avec étalement de spectre, à une puissance de 25 mW. Le débit peut être faible compte tenu de la faible quantité de données (par exemple 100 à 300 bits/sec pour augmenter la portée du signal, mais on peut monter à 1 ou 2 kbits/sec). La portée d'un tel signal est de l'ordre de 2 km en milieu urbain.

La communication entre chaque système de mesure et de régulation de débit et son boitier de gestion locale (et, si présent, entre chaque système de mesure de la consommation d'eau sanitaire **22** et son boitier de gestion locale **23**) données) peut se faire par tout moyen de communication sans fil approprié, et en utilisant tout protocole de communication approprié. Par exemple, les protocoles de communication connus sous le nom « Wifi », les protocoles connus sous le nom éthernet, les liaisons sans fil à faible consommation énergétique (tel que le système connu sous le sigle « LoRa ») peuvent convenir. On préfère la technologie WiFi.

L'invention peut être lise en œuvre selon plusieurs variantes supplémentaires qui peuvent être combinées entre elles.

Selon un mode de réalisation, on calcule la puissance de chauffe ou de refroidissement émise par les échangeurs de chaleurs selon un algorithme intégrant la puissance nominale de l'échangeur de chaleur, la différence de température entre la température au point P1 et la température au point P2 de l'échangeur de chaleur (ou la différence entre la température ambiante et la température moyenne de l'échangeur de chaleur), et le débit d'eau.

Selon un autre mode de réalisation on prévoit entre le premier niveau d'intégration (boitier de gestion locale **23**) et le deuxième niveau d'intégration (centrale de gestion de données **24**) un niveau intermédiaire, à savoir un concentrateur (appelé selon le cas « concentrateur étage » ou « concentrateur zone »), qui centralise la communication avec les boitiers de gestion locale **23** situées sur un même étage ou dans une même zone de l'immeuble, dans le périmètre de propagation des ondes.

Selon un autre mode de réalisation, on prévoit pour chaque boitier de gestion locale une interface utilisateur avec écran tactile, permettant d'afficher, de gérer et d'entrer des données, de programmer le profil thermique et de régler le système en mode manuel. Cette interface peut intégrer d'autres fonctions. A titre d'exemple, on peut programmer cette interface pour que la puissance nominale de chaque échangeur de chaleur soit calculée à la mise en route de l'installation par le module de mesure, et la valeur calculée est stockée en mémoire ; cela permet d'optimiser le rendement et donc le gain en termes de consommation, et simplifie le paramétrage du système lors de son installation.

Le système selon l'invention étant installé et exploité dans le cadre d'un système radioélectrique (i.e. sans fil), il possible d'intégrer d'autres fonctions utiles dans un immeuble qui se font selon l'état de la technique par une transmission filaire. Ainsi, selon l'invention, on peut intégrer dans le système radioélectrique le portier vidéo (c'est-à-dire l'interphone doté d'une caméra permettant de capter l'image de la personne qui actionne l'interphone) de l'immeuble, qui communique avec une interface utilisateur située dans chaque unité d'occupation, ladite interface utilisateur disposant d'un écran d'affichage pour afficher l'image captée par la caméra du portier vidéo.

De même, il est possible de prévoir à l'entrée de chaque unité d'occupation une caméra de porte **25** (appelé aussi « judas électronique »), sans fil, qui permet de capter l'image du visiteur qui se présente devant la porte d'entrée de l'unité d'occupation, et de l'afficher sur l'écran d'affichage de ladite interface utilisateur. De même, on peut prévoir un accès par internet pour programmer le boitier de gestion locale **23** à distance.

La figure 3 montre de manière schématique un premier mode de réalisation d'un réseau radioélectrique selon l'invention pour deux unités d'occupation « a » et « b ».

L'unité « a » est dotée de quatre dispositifs de mesure et de régulation **4a-1, 4a-2, 4a-3, 4a-4** et d'un compteur d'eau sanitaire **22a,** qui envoient, par un réseau de type LoRa ou autre, des données vers la centrale de gestion des données **24,** et qui envoient également, par un réseau de type WiFi ou autre, des données vers leur boitier de gestion locale **23a.** L'unité d'occupation dispose également d'une caméra de porte **25a** qui envoie des données vidéo au boitier de gestion locale **23a.** L'utilisateur habilité consulte ces données à l'aide de son téléphone portable **26a** qui se connecte audit boitier de gestion locale **23a.**

De manière similaire, l'unité « b » est dotée de cinq dispositifs de mesure et de régulation **4b-1, 4b-2, 4b-3, 4b-4, 4b-5,** et d'un compteur d'eau sanitaire **22b,** qui envoient des données vers la centrale de gestion des données **24,** et qui envoient également des données vers leur boitier de gestion locale **23b.** La caméra de porte **25b** envoie des données vidéo au boitier de gestion locale **23b.**

Selon l'invention, afin de diminuer le coût de l'intervention sur les radiateurs, on intègre dans le système de mesure et de régulation de débit pour un radiateur en plus de cette fonction, d'autres fonctions utiles, telles que : le comptage d'énergie, la régulation de la température du radiateur, l'équilibrage du circuit de fluide caloporteur.

On peut également intégrer dans le système radioélectrique selon l'invention encore d'autres fonctions, tels que : la régulation de l'hygrométrie, la mémorisation des données, la reconnaissance automatique de la position de chaque dispositif dans l'immeuble. Toutes les données des appareils de l'immeuble sont individualisées, protégées, stockées et centralisées dans une centrale de gestion de données qui peut être située dans le local technique de l'immeuble ; la durée de ce stockage est de préférence d'au moins 10 ans. Ces données sont mises à disposition des opérateurs autorisés, avec accès par internet, réseau filaire ou autre, pour établir la facturation.

Ladite centrale de gestion des données **24** peut contenir d'autres données, telles que le carnet d'entretien de l'immeuble et/ou des unités d'occupation ; ces données sont entrées et modifiées par un technicien habilité, et le système peut être configuré de manière à permettre aux occupants (et/ou propriétaires) des unités d'occupation de consulter la totalité de ces données, ou seulement une partie de ces données, dont celles concernent leur unité d'occupation.

Comme indiqué ci-dessus, la centrale de gestion de données **24** peut être prévue pour un immeuble ou pour un groupe d'immeubles, selon la portée du signal et de la distance entre les immeubles, selon les procédures de gestion des immeubles souhaitées, et selon le nombre d'échangeurs de chaleur à gérer.

Dans un mode de réalisation on a choisi pour la communication entre les dispositifs de mesure et de régulation et la centrale de gestion des données **24** la technologie dite LoRa qui se caractérise par une faible consommation d'énergie et une longue portée (typiquement de 2 à 5 km) ; son débit de données et faible et ne permet pas la transmission d'images vidéo).

Le calcul de la consommation énergétique se fait par le microprocesseur **18** de chaque dispositif de mesure et de régulation qui transmet ces données, assorties de l'identification de l'échangeur de chaleur auquel elles se réfèrent, à la centrale de gestion de données.

La technologie WiFi est de courte portée, elle est utilisée pour la transmission de données entre le boitier de gestion locale **23** et ses dispositifs de mesure et de régulation, notamment pour la transmission et le contrôle de consignes. Dans certaines configurations d'immeuble, et notamment s'il y a un signal vidéo à transmettre (par exemple dans le cas où un portier vidéo est prévu, comme décrit ci-dessus), la portée des signaux WiFi peut s'avérer insuffisante pour couvrir l'ensemble des unités d'occupation d'une unité de gestion centralisée, et pour palier à ce problème, la solution consiste à disposer au moins un (et de préférence une pluralité de) concentrateur(s) (appelé aussi « répéteur-amplificateur »), notamment un par étage ou groupes d'appartements, qui récupère(nt) des données (reçues par signal Wifi) des dispositifs de mesure et de régulation pour les retransmettre.

L'invention peut être utilisée pour des systèmes de chauffage, mais aussi pour des systèmes de refroidissement, à condition que dans les échangeurs de chaleur sont alimentés en liquide caloporteur, chaud ou froid.

Nous décrivent ici de manière synthétique le système radioélectrique de relevé et de gestion automatisée des charges de chauffage selon l'invention. Il comprenant
- une pluralité de systèmes de détermination individuelle de la consommation énergétique et de régulation thermique individuelle d'un échangeur de chaleur selon l'invention,
- une pluralité de boitiers de gestion locale **23a,b,** chaque boitier de gestion locale **23a,23b** étant en liaison radioélectrique avec l'ensemble des dispositifs de mesure et de régulation de débit **4a-1, 4a-2, 4a-3, 4a-4 ; 4b-1, 4b-2, 4b-3, 4b-4, 4b-5** installées dans une unité d'occupation, et ladite pluralité de boitiers de gestion locale **23a,b** étant installée dans un même immeuble ou groupe d'immeubles ;
- une centrale de gestion des données **24,** qui est en liaison radioélectrique avec chaque dispositif de mesure et de régulation de débit **4a-1, 4a-2, 4a-3, 4a-4** ; **4b-1, 4b-2, 4b-3, 4b-4, 4b-5** installé dans ledit immeuble ou groupe d'immeubles.

Sachant que :
- chaque dispositif de mesure et de régulation de débit **4a-1, 4a-2, 4a-3, 4a-4** ; **4b-1, 4b-2, 4b-3, 4b-4, 4b-5** transmet à ladite centrale de gestion des données **24** des informations sur la consommation énergétique de son échangeur de chaleur, assorties d'un identifiant dudit échangeur de chaleur ou de l'unité d'occupation dans laquelle est installé ledit échangeur de chaleur ;
- chaque dispositif de mesure et de régulation de débit **4a-1, 4a-2, 4a-3, 4a-4** ; **4b-1, 4b-2, 4b-3, 4b-4, 4b-5** transmet au dit boitier de gestion locale **23a,b** relevant de son unité d'occupation des données relatives à une température dudit échangeur de chaleur ;
- chaque dispositif de mesure et de régulation de débit **4a-1, 4a-2, 4a-3, 4a-4** ; **4b-1, 4b-2, 4b-3, 4b-4, 4b-5** reçoit du dit boitier de gestion locale **23a,b** des consignes susceptibles d'agir sur son organe **10** de régulation du débit du fluide caloporteur.

Ledit système radioélectrique peut comprendre en plus au niveau d'au moins une unité d'occupation un dispositif de mesure de la consommation d'eau chaude **22a,b** doté d'un émetteur radioélectrique, capable de transmettre ses données de consommation, assorties d'un identifiant dudit dispositif de mesure ou de l'unité d'occupation dans laquelle est installé ledit dispositif de mesure, à ladite centrale de gestion des données **24.** Au sein du reseau radioélectrique selon l'invention, ledit dispositif de mesure de la consommation d'eau chaude **22** est intégré comme un dispositif de mesure et de régulation de débit **4.**

Ledit réseau radioélectrique peut comprendre en plus au niveau d'au moins une unité d'occupation une caméra de porte **25a,b** capable de transmettre des données vidéo audit boitier de gestion locale **23a,b** de son unité d'occupation.

Il peut comprendre en plus au niveau de chaque immeuble au moins un portier électronique doté d'une interface de sélection des unités d'occupation, qui transmet des données vidéo à un boitier de gestion locale **23** sélectionné sur ladite interface de sélection.

La communication entre chaque dispositif de mesure et de régulation de débit **4a-1, 4a-2, 4a-3, 4a-4** ; **4b-1, 4b-2, 4b-3, 4b-4, 4b-5** et la centrale de gestion des données **24,** d'une part, et la communication entre lesdits dispositifs de mesure et de régulation et le boitier de gestion locale **23,** d'autre part, se fait à une zone de fréquence différente, en fonction de la distance de transmission visée.

De préférence, on utilise un réseau de type LoRa pour communication entre chaque dispositif de mesure et de régulation de débit **4a-1, 4a-2, 4a-3, 4a-4** ; **4b-1, 4b-2, 4b-3, 4b-4, 4b-5** et la centrale de gestion des données **24,** et un réseau de type WiFi pour la communication entre lesdits dispositifs de mesure et de régulation et le boitier de gestion locale **23,** d'autre part.

Cette communication est avantageusement bidirectionnelle. La transmission de données de chaque dispositif de mesure et de régulation **4a-1, 4a-2, 4a-3, 4a-4** ; **4b-1, 4b-2, 4b-3, 4b-4, 4b-5, 22a, 22b** vers la centrale de gestion des données **24** se fait avantageusement en réponse à une requête émise par ladite centrale de gestion des données **24** à l'adresse de chacune desdits dispositifs de mesure **4,22.** Avantageusement chacun desdits dispositifs de mesure **4,22** dipose de sa propre adresse identification qu'il transmet avec l'information qui lui est spécifique à la centrale de gestion des données **24.** Ladite requête peut être émise une fois ou plusieurs fois par jour. En réponse à la requête ledit dispositif de mesure **4,22** peut transmettre sa valeur de mesure instantanée, et/ou une série de valeurs de mesure enregistrées, par exemple périodiquement, et stockées dans une mémoire.

La figure 4 montre de manière schématique un deuxième mode de réalisation d'un réseau radioélectrique selon l'invention pour deux unités d'occupation « a » et « b ». Il est dérivé du premier mode de réalisation de la figure 3 et se distingue de ce dernier par la possibilité de transmission de signaux entre les différents dispositifs de mesure et de régulation **4, 22** par un moyen de transmission de signaux sans fil de courte portée, tel que le WiFi, le BlueTooth et le EnOcean. Cette communication peut se faire entre lesdits dispositifs de mesure et de régulation **4a-1, 4a-2, 4a-3, 4a-4, 22a** situés au sein de la même unité d'occupation (ici l'unité a), mais aussi entre dispositifs de mesure et de régulation **4a-1, 4a-2, 4a-3, 4a-4 , 4b-1, 4b-2, 4b-3, 4b-4, 4b-5, 22b** situés au sein de deux unités d'occupation voisines ou proches. Cette communication se fait pour autant qu'elle est possible compte tenu de la courte portée des signaux. Elle comporte les mêmes signaux que ceux échangés entre les dispositifs de mesure et de régulation **4, 22** et la centrale de gestion de données **24.** Elle comporte toujours l'adresse propre à chaque dispositif de mesure et de régulation **4, 22.** Dans ce mode de réalisation, la transmission de singal entre les dispositifs de mesure et de régulation **4, 22** permet de créer un chemin de communication indirect avec la centrale de gestion dans le cas où le chemin de communication direct entre un dispositif de gestion et de régulation **4, 22** et la centrale de gestion de données **24** est désactive ou autrement inopérant. Ce défaut de communication entre un dispositif de gestion et de régulation **4, 22** et la centrale de gestion de données **24** peut résulter du fait que ledit dispositif de mesure **4, 22** se situe en dehors de la portée du signal émis par la centrale de gestion de données **24,** ou de l'obstruction temporaire de la transmission de signal sans fil (par exemple suite au placement d'un obstacle métallique à proximité du dispositif **4, 22**) ou de l'affaiblissement temporaire de son signal (suite à une décharge de la batterie), ou encore suite à la perturbation du signal par des signaux électromagnétiques parasites.

Comme dans le premier mode de réalisation la communication entre la centrale de gestion de données **24** et les dispositifs **4, 22** peut se faire par un réseau de type LoRa. Ce deuxième mode de réalisation est compatible avec l'ensemble des fonctionnalités qui ont été décrites en relation avec le premier mode de réalisation, et ces combinaisons rentrent dans le cadre de la présente invention.

Dans un troisième mode de réalisation, qui est compatible avec le premier et le deuxième et peut être combiné avec chacun d'entre eux, la centrale de gestion de données **24** utilise les données transmises par les dispositifs **4, 22** pour contrôler et adapter le fonctionnement de la chaudière avec laquelle elle communique. A titre d'exemple, lorsque la centrale de gestion de données **24** établit à partir des données qui lui ont été transmises par les dispositifs **4, 22** que la consommation d'eau chaude est importante, elle peut adapter le fonctionnement de la chaudière à cette forte demande en eau chaude. Inversement, lorsque la demande en eau chaude est faible, la centrale de gestion de données **24** peut adapter la production d'eau chaude à cette faible demande. Pour établir le mode de fonctionnement de la chaudière la centrale de gestion de données **24** peut également utiliser des informations fournies par un ou plusieurs dispositifs de mesure de la température extérieure. La communication entre la chaudière et la centrale de gestion de données **24** peut se faire par tout moyen approprié, par exemple par la technique LoRa. Selon une variante, la centrale de gestion de données **24** peut communiquer des données brutes ou retraitées à un microprocesseur qui reçoit les informations brutes ou retraitées de plusieurs centrales de gestion de données **24** et qui émet des instructions de pilotage à la chaudière.

Dans ce mode de réalisation la chaudière fait partie dudit réseau radioélectrique. Le mode de réalisation peut comprendre un procédé de régulation d'une chaudière dans un système radioélectrique selon l'invention, dans lequel le fonctionnement de la chaudière (et en particulier la puissance calorique que fournit cette dernière) est réglé par des instructions de pilotage qui lui sont transmises par un microprocesseur qui est configuré pour recevoir des données portant sur la consommation d'eau chaude et pour établir lesdites instructions de pilotage en utilisant lesdites données portant sur la consommation. Ledit microprocesseur peut faire partie de ladite centrale de gestion de données **24,** ou il peut recevoir ces données de cette dernière. Ledit microprocesseur peut être configuré pour utiliser en plus des données provenant d'informations relatives au déclenchement d'un mode d'abaissement de température dans les unités d'occupation, et/ou des données provenant d'un dispositif de mesure de la température externe.

Le système radioélectrique selon l'invention peut également comporter, pour au moins une unité d'occupation et de préférence pour chaque unité d'occupation, au moins un détecteur de présence capable de communiquer au boitier de gestion locale une information relative à la présence d'un occupant ; cette information peut être utilisée par le boitier de gestion locale pour désactiver un mode « abaissement de température » qui aurait été déclenché (typiquement par un occupant de l'unité d'occupation) au niveau dudit boitier de gestion locale.

Le système radioélectrique selon l'invention peut également comporter, pour au moins une unité d'occupation et de préférence pour chaque unité d'occupation, au moins un détecteur de CO₂ capable de communiquer au boitier de gestion locale une information relative seuil de concentration de CO₂ à la concentration de CO₂ et/ou au dépassement d'un seuil de concentration de CO₂ ; cette information peut être utilisée par le boitier de gestion locale pour générer une information destinée aux occupants de ladite unité d'occupation, ou un signal d'alarme.

Le système radioélectrique selon l'invention peut également comporter, pour au moins une unité d'occupation et de préférence pour chaque unité d'occupation, au moins un détecteur de composés organiques volatiles (COV) capable de communiquer au boitier de gestion locale une information relative à la concentration de COV et/ou au dépassement d'un seuil de concentration de COV ; cette information peut être utilisée par le boitier de gestion locale pour générer une information destinée aux occupants de ladite unité d'occupation assortie de la recommandation d'aérer le local.

## Revendications

1. Système de détermination individuelle de la consommation énergétique et de régulation thermique individuelle d'un échangeur de chaleur (1) destiné à être monté sur un circuit de liquide caloporteur, notamment pour radiateur à eau chaude, comprenant :
- un dispositif de mesure et de régulation de débit (4) comprenant :
∘ un organe (10) de régulation du débit du fluide caloporteur, qui comprend un système mécanique de régulation de débit et un système de commande dudit système de régulation pouvant être actionné automatiquement ou manuellement ;
∘ un dispositif de mesure de débit (13) ;
∘ une première sonde de température (8) mesurant la température du fluide caloporteur à l'entrée (2) de l'échangeur de chaleur (1) ;
- une unité électronique, comprenant :
∘ un microprocesseur (18), qui est en liaison fonctionnelle avec une unité de mémoire (17),
∘ un premier émetteur-récepteur radioélectrique (19), capable de communiquer avec une centrale de gestion de données (24), ledit émetteur-récepteur (19) étant en liaison fonctionnelle avec ledit microprocesseur (18),
- un système d'alimentation électrique (11) indépendant du réseau électrique externe, qui alimente au moins ledit dispositif de mesure et de régulation (4) de débit, s'il a besoin d'une telle alimentation, et ledit premier émetteur-récepteur (19) radioélectrique,
- une deuxième sonde de température (9) mesurant la température du fluide caloporteur à la sortie (3) de l'échangeur de chaleur (1), configurée pour transmettre des données de température au microprocesseur,
sachant que :
- ledit dispositif de mesure et de régulation de débit (4) est disposé dans une première unité (5), destinée à être montée sur le circuit de fluide caloporteur en un premier point P1,
- ladite deuxième sonde (9) de température est disposée dans une seconde unité (6), destinée à être montée sur le même circuit de fluide caloporteur en un second point P2, situé en aval dudit premier point P1, ledit point P1 étant situé à l'entrée dudit échangeur de chaleur (1) et ledit point P2 étant situé à la sortie dudit échangeur de chaleur (2) ;
**caractérisé en ce que**
- ledit premier émetteur-récepteur (19) radioélectrique et ledit microprocesseur (18) sont disposés dans la première unité (5) ou dans une troisième unité (7) qui se fixe sur ladite première unité (5), et
- ladite deuxième sonde (9) de température communique avec ledit microprocesseur (18) soit par un système sans fil, par l'intermédiaire d'un deuxième émetteur radioélectrique qui communique avec un récepteur situé dans la seconde unité (6), soit, de manière préféré, par une liaison filaire (21), et
- ledit système d'alimentation électrique (11) indépendant du réseau électrique externe est disposé dans la seconde unité (6), dans ce cas une liaison filaire (21) est prévue qui permet d'alimenter aussi la première unité (5) et, si présente, la troisième unité (7), ou, de manière préférée, dans la première (5) unité.

2. Système selon la revendication 1, **caractérisé en ce que** ledit dispositif de mesure de débit (13) est un débitmètre à ultrasons.

3. Système selon l'une quelconque des revendications 1 ou 2, **caractérisé en ce que** ledit système d'alimentation autonome (11) est un système à effet thermoélectrique.

4. Système selon l'une quelconque des revendications 1 à 3, **caractérisé en ce que** ledit organe (10) de régulation du débit du fluide caloporteur comprend un moteur pas à pas.

5. Système radioélectrique de relevé et de gestion automatisée des charges de chauffage, comprenant :
- une pluralité de systèmes de détermination individuelle de la consommation énergétique et de régulation thermique individuelle d'un échangeur de chaleur selon l'une quelconque des revendications 1 à 4 ;
- une pluralité de boitiers de gestion locale (23a,b), chaque boitier de gestion locale (23a,23b) étant en liaison radioélectrique avec l'ensemble des dispositifs de mesure et de régulation de débit (4a-1, 4a-2, 4a-3, 4a-4 ; 4b-1, 4b-2, 4b-3, 4b-4, 4b-5) installées dans une unité d'occupation, et ladite pluralité de boitiers de gestion locale (23a,b) étant installée dans un même immeuble ou groupe d'immeubles ;
- une centrale de gestion des données (24), qui est en liaison radioélectrique avec chaque dispositif de mesure et de régulation de débit (4a-1, 4a-2, 4a-3, 4a-4 ; 4b-1, 4b-2, 4b-3, 4b-4, 4b-5) installé dans ledit immeuble ou groupe d'immeubles ;
Sachant que :
- chaque dispositif de mesure et de régulation de débit (4a-1, 4a-2, 4a-3, 4a-4 ; 4b-1, 4b-2, 4b-3, 4b-4, 4b-5) est configuré pour transmettre à ladite centrale de gestion des données (24) des informations sur la consommation énergétique de son échangeur de chaleur, assorties d'un identifiant dudit échangeur de chaleur ou de l'unité d'occupation dans laquelle est installé ledit échangeur de chaleur ;
- chaque dispositif de mesure et de régulation de débit (4a-1, 4a-2, 4a-3, 4a-4 ; 4b-1, 4b-2, 4b-3, 4b-4, 4b-5) est configuré pour transmettre au dit boitier de gestion locale (23a,b) relevant de son unité d'occupation des données relatives à une température dudit échangeur de chaleur ;
- chaque dispositif de mesure et de régulation de débit (4a-1, 4a-2, 4a-3, 4a-4 ; 4b-1, 4b-2, 4b-3, 4b-4, 4b-5) est configuré pour recevoir du dit boitier de gestion locale (23a,b) des consignes susceptibles d'agir sur son organe (10) de régulation du débit du fluide caloporteur.

6. Système radioélectrique selon la revendication 5, **caractérisé en ce qu'**il comprend en plus au niveau d'au moins une unité d'occupation un dispositif de mesure de la consommation d'eau chaude (22a,b) doté d'un émetteur radioélectrique, qui est configuré pour transmettre ses données de consommation, assorties d'un identifiant dudit dispositif de mesure ou de l'unité d'occupation dans laquelle est installé ledit dispositif de mesure, à ladite centrale de gestion des données (24).

7. Système radioélectrique selon la revendication 5 ou 6, **caractérisé en ce qu'**il comprend en plus au niveau d'au moins une unité d'occupation une caméra de porte (25a,b) qui est configurée pour transmettre des données vidéo audit boitier de gestion locale (23a,b) de son unité d'occupation.

8. Système radioélectrique selon l'une quelconque des revendications 5 à 7, **caractérisé en ce qu'**il comprend en plus au niveau de chaque immeuble au moins un portier électronique doté d'une interface de sélection des unités d'occupation, qui est configuré pour transmettre des données vidéo à un boitier de gestion locale (23) sélectionné sur ladite interface de sélection.

9. Système radioélectrique selon l'une quelconque des revendication 5 à 8, **caractérisé en ce que** la communication entre chaque dispositif de mesure et de régulation de débit (4a-1, 4a-2, 4a-3, 4a-4 ; 4b-1, 4b-2, 4b-3, 4b-4, 4b-5) et la centrale de gestion des données (24), d'une part, et la communication entre lesdits dispositifs de mesure et de régulation et le boitier de gestion locale (23), d'autre part, se fait à une zone de fréquence différente.

10. Système radioélectrique selon l'une quelconque des revendications 5 à 9, **caractérisé en ce qu'**il comprend une chaudière dont le fonctionnement, et en particulier la puissance calorique qu'elle fournit, est réglé par des instructions de pilotage qui lui sont transmises par un microprocesseur qui est configuré pour recevoir des données portant sur la consommation de liquide caloporteur chaud et pour établir lesdites instructions de pilotage en utilisant lesdites données portant sur la consommation de liquide caloporteur chaud.

11. Système radioélectrique selon la revendication 10, **caractérisé en ce que** ledit microprocesseur fait partie de ladite centrale de gestion de données.

12. Système radioélectrique selon la revendication 10 ou 11, **caractérisé en ce que** ledit microprocesseur est configuré pour utiliser en plus des données provenant d'informations relatives au déclenchement d'un mode d'abaissement de température dans les unités d'occupation, et/ou des données provenant d'un dispositif de mesure de la température externe.

13. Système radioélectrique selon l'une quelconque des revendications 10 à 12, **caractérisé en ce qu'**il comprend en outre, pour au moins une unité d'occupation et de préférence pour chaque unité d'occupation,
- au moins un détecteur de présence capable de communique au boitier de gestion locale une information relative à la présence d'un occupant ;
- et/ou au moins un détecteur de CO₂ capable de communiquer au boitier de gestion locale une information relative au seuil de concentration de CO₂, à la concentration de CO₂, et/ou au dépassement d'un seuil de concentration de CO₂ ;
- et/ou au moins un détecteur de composés organiques volatiles (COV) capable de communiquer au boitier de gestion locale une information relative à la concentration de COV et/ou au dépassement d'un seuil de concentration de COV.

14. Procédé de régulation d'une chaudière dans un système radioélectrique selon l'une quelconque des revendications 10 à 13, dans lequel le fonctionnement de la chaudière, et en particulier la puissance calorique que fournit cette dernière, est réglé par des instructions de pilotage qui lui sont transmises par un microprocesseur qui est configuré pour recevoir des données portant sur la consommation d'eau chaude et pour établir lesdites instructions de pilotage en utilisant lesdites données portant sur la consommation.

## Patentansprüche

1. System zur individuellen Bestimmung des Energieverbrauchs und individueller thermischer Regulierung eines Wärmetauschers (1), bestimmt, um an einen Wärmeträgerflüssigkeitskreislauf, insbesondere für Warmwasserheizkörper, montiert zu werden, umfassend:
- eine Mess- und Volumenstromregulierungsvorrichtung (4), umfassend:
∘ ein Bauteil (10) zur Regulierung des Volumenstroms des Wärmeträgerfluids, das ein mechanisches Volumenstromregulierungssystem und ein Regelsystem des Regulierungssystems umfasst, das automatisch oder manuell betätigt werden kann;
∘ eine Volumenstrommessvorrichtung (13);
∘ einen ersten Temperaturfühler (8), der die Temperatur des Wärmeträgerfluids am Eingang (2) des Wärmetauschers (1) misst;
- eine elektronische Einheit, umfassend:
∘ einen Mikroprozessor (18), der in Wirkverbindung mit einer Speichereinheit (17) steht;
∘ einen ersten Funktransceiver (19), der in der Lage ist, mit einer Datensteuerungszentrale (24) zu kommunizieren, wobei der Transceiver (19) mit dem Mikroprozessor (18) in Wirkverbindung steht,
- ein von dem externen Stromnetz unabhängiges Stromversorgungssystem (11), das mindestens die Mess- und Volumenstromregulierungsvorrichtung (4), wenn sie einer solchen Versorgung bedarf, und den ersten Funktransceiver (19) versorgt,
- einen zweiten Temperaturfühler (9), der die Temperatur des Wärmeträgerfluids am Ausgang (3) des Wärmetauschers (1) misst, konfiguriert zum Übermitteln von Temperaturdaten an den Mikroprozessor,
wobei:
- die Mess- und Volumenstromregulierungsvorrichtung (4) in der ersten Einheit (5), bestimmt, um an dem Wärmeträgerfluidkreislauf an einem ersten Punkt P1 montiert zu werden, angeordnet ist,
- der zweite Temperaturfühler (9) in einer zweiten Einheit (6), bestimmt, um an dem gleichen Wärmeträgerfluidkreislauf an einem zweiten Punkt P2 montiert zu werden, der sich dem ersten Punkt P1 nachgelagert befindet, angeordnet ist, wobei der Punkt P1 sich am Eingang des Wärmetauschers (1) befindet und der Punkt P2 sich am Ausgang des Wärmetauschers (2) befindet; **dadurch gekennzeichnet, dass**
- der erste Funktransceiver (19) und der Mikroprozessor (18) in einer ersten Einheit (5) oder in einer dritten Einheit (7), die auf der ersten Einheit (5) befestigt ist, angeordnet sind, und
- der zweite Temperaturfühler (9) mit dem Mikroprozessor (18) entweder durch ein drahtloses System, durch die Vermittlung eines zweiten Funksenders, der mit einem Empfänger kommuniziert, der sich in der zweiten Einheit (6) befindet oder auf bevorzugte Weise durch eine Drahtverbindung (21) kommuniziert, und
- das vom externen Stromnetz unabhängige Stromversorgungssystem (11) in einer zweiten Einheit (6), wobei in diesem Fall eine Drahtverbindung (21) vorgesehen ist, die gestattet, auch die erste Einheit (5), und, falls vorhanden, die dritte Einheit (7) zu versorgen, oder auf bevorzugte Weise in der ersten Einheit (5) angeordnet ist.

2. System nach Anspruch 1, **dadurch gekennzeichnet, dass** die Volumenstrommessvorrichtung (13) ein Ultraschalldurchflussmessgerät ist.

3. System nach einem der Ansprüche 1 oder 2, **dadurch gekennzeichnet, dass** das autonome Versorgungssystem (11) ein System mit thermoelektrischem Effekt ist.

4. System nach einem der Ansprüche 1 bis 3, **dadurch gekennzeichnet, dass** das Bauteil (10) zur Regulierung des Volumenstroms des Wärmeträgerfluids einen Schrittmotor umfasst.

5. Funksystem zum automatisierten Erheben und Steuern der Heizlasten, umfassend:
- eine Vielzahl von Systemen zur individuellen Bestimmung des Energieverbrauchs und individuellen thermischen Regulierung eines Wärmetauschers nach einem der Ansprüche 1 bis 4;
- eine Vielzahl von Steuerungskästen (23a,b), wobei jeder lokale Steuerungskasten (23a, 23b) mit den in einer Belegungseinheit installierten Mess- und Volumenstromregulierungsvorrichtungen (4a-1, 4a-2, 4a-3, 4a-4; 4b-1, 4b-2, 4b-3, 4b-4, 4b-5) in Funkverbindung steht, und die Vielzahl von lokalen Steuerungskästen (23a,b) in einem gleichen Gebäude oder Gruppe von Gebäuden installiert ist;
- eine Datensteuerungszentrale (24), die mit jeder in dem Gebäude oder Gruppe von Gebäuden installierten Mess- und Volumenstromregulierungsvorrichtung (4a-1, 4a-2, 4a-3, 4a-4; 4b-1, 4b-2, 4b-3, 4b-4, 4b-5) in Funkverbindung steht;
wobei:
- jede Mess- und Volumenstromregulierungsvorrichtung (4a-1, 4a-2, 4a-3, 4a-4; 4b-1, 4b-2, 4b-3, 4b-4, 4b-5) zum Übermitteln von Informationen über den Energieverbrauch ihres Wärmetauschers, begleitet von einem Identifikator des Wärmetauschers oder der Belegungseinheit, in der der Wärmetauscher installiert ist, an die Datensteuerungszentrale (24) konfiguriert ist;
- jede Mess- und Volumenstromregulierungsvorrichtung (4a-1, 4a-2, 4a-3, 4a-4; 4b-1, 4b-2, 4b-3, 4b-4, 4b-5) zum Übermitteln von dem ihrer Belegungseinheit relevanten lokalen Steuerungskasten (23a,b) Daten in Bezug auf eine Temperatur des Wärmetauschers konfiguriert ist;
- jede Mess- und Volumenstromregulierungsvorrichtung (4a-1, 4a-2, 4a-3, 4a-4; 4b-1, 4b-2, 4b-3, 4b-4, 4b-5) zum Empfangen von Vorgaben des lokalen Steuerungskastens (23a,b) konfiguriert ist, die geeignet sind, auf ihr Bauteil (10) zur Regulierung des Volumenstroms des Wärmeträgerfluids zu wirken.

6. Funksystem nach Anspruch 5, **dadurch gekennzeichnet, dass** es zudem hinsichtlich mindestens einer Belegungseinheit eine mit einem Funksender ausgestattete Messvorrichtung des Verbrauchs warmen Wassers (22a,b) umfasst, die zum Übermitteln ihrer Verbrauchsdaten, begleitet von einem Identifikator der Messvorrichtung oder der Belegungseinheit, in der die Messvorrichtung installiert ist, an die Datensteuerungszentrale (24) konfiguriert ist.

7. Funksystem nach Anspruch 5 oder 6, **dadurch gekennzeichnet, dass** es zudem hinsichtlich mindestens einer Belegungseinheit eine Türkamera (25a,b) umfasst, die zum Übermitteln von Videodaten an den lokale Steuerungskasten (23a,b) ihrer Belegungseinheit konfiguriert ist.

8. Funksystem nach einem der Ansprüche 5 bis 7, **dadurch gekennzeichnet, dass** es zudem hinsichtlich jedes Gebäudes mindestens einen elektronischen Portier umfasst, ausgestattet mit einer Auswahlschnittstelle von Belegungseinheiten, der zum Übermitteln von Videodaten an einen an der Auswahlschnittstelle ausgewählten lokalen Steuerungskasten (23) konfiguriert ist.

9. Funksystem nach einem der Ansprüche 5 bis 8, **dadurch gekennzeichnet, dass** die Kommunikation zwischen jeder Mess- und Volumenstromregulierungsvorrichtung (4a-1, 4a-2, 4a-3, 4a-4; 4b-1, 4b-2, 4b-3, 4b-4, 4b-5) und der Datensteuerungszentrale (24) einerseits und die Kommunikation zwischen den Mess- und Regulierungsvorrichtungen und dem lokalen Steuerungskasten (23) andererseits in einem unterschiedlichen Frequenzbereich stattfindet.

10. Funksystem nach einem der Ansprüche 5 bis 9, **dadurch gekennzeichnet, dass** es einen Heizkessel umfasst, von dem die Funktionsweise und besonders die Wärmeleistung, die er liefert, durch Steueranweisungen geregelt wird, die ihm durch einen Mikroprozessor übermittelt werden, der zum Empfangen von Daten betreffend den Verbrauch von warmer Wärmeträgerflüssigkeit und, unter Verwendung der Daten betreffend den Verbrauch von warmer Wärmeträgerflüssigkeit, zum Etablieren der Steueranweisungen konfiguriert ist.

11. Funksystem nach Anspruch 10, **dadurch gekennzeichnet, dass** der Mikroprozessor Teil der Datensteuerungszentrale ist.

12. Funksystem nach Anspruch 10 oder 11, **dadurch gekennzeichnet, dass** der Mikroprozessor zudem zum Verwenden von Daten konfiguriert ist, die von Informationen in Bezug auf Auslösung eines Temperaturabsenkmodus in den Belegungseinheiten stammen und/oder von einer Messvorrichtung der externen Temperatur stammen.

13. Funksystem nach einem der Ansprüche 10 bis 12, **dadurch gekennzeichnet, dass** es für mindestens eine Belegungseinheit und vorzugsweise für jede Belegungseinheit des Weiteren umfasst
- mindestens einen Präsenzmelder, der in der Lage ist, eine Information in Bezug auf die Gegenwart eines Bewohners an den lokalen Steuerungskasten zu kommunizieren;
- und/oder mindestens einen CO₂-Detektor, der in der Lage ist, eine Information in Bezug auf die CO₂-Konzentrationsschwelle; die CO₂-Konzentration; und/oder das Überschreiten einer CO₂-Konzentrationsschwelle an den lokalen Steuerungskasten zu kommunizieren;
- und/oder mindestens einen Detektor flüchtiger organischer Verbindungen (COV), der in der Lage ist, eine Information in Bezug auf die COV-Konzentration und/oder das Überschreiten einer COV-Konzentrationsschwelle an den lokalen Steuerungskasten zu kommunizieren.

14. Regulierungsverfahren eines Heizkessels in einem Funksystem nach einem der Ansprüche 10 bis 13, wobei die Funktionsweise des Heizkessels und insbesondere die Wärmeleistung, die Letzterer liefert, durch Steueranweisungen geregelt wird, die ihm durch einen Mikroprozessor übermittelt werden, der zum Empfangen von Daten betreffend den Verbrauch von warmem Wasser und, unter Verwendung der Daten betreffend den Verbrauch, zum Etablieren der Steueranweisungen konfiguriert ist.

## Claims

1. System for the individual determination of the energy consumption and for the individual thermal regulation of a heat exchanger (1) intended to be mounted on a heat-transfer liquid circuit, in particular for a hot-water radiator, comprising:
- a flow measurement and regulation device (4) comprising:
∘ a member (10) for regulating the flow of the heat-transfer fluid, which comprises a mechanical flow-regulation system and a system for controlling said regulation system able to be actuated automatically or manually;
∘ a flow-measurement device (13);
∘ a first temperature sensor (8) measuring the temperature of the heat-transfer fluid at the inlet (2) of the heat exchanger (1);
- an electronic unit, comprising:
∘ a microprocessor (18), which is in functional connection with a memory unit (17),
∘ a first radio transceiver (19), capable of communicating with a data management unit (24), said transceiver (19) being in functional connection with said microprocessor (18),
- an electrical supply system (11) independent of the external electrical system, which supplies at least said flow measurement and regulation device (4), if it needs such a power supply, and said first radio transceiver (19),
- a second temperature sensor (9) measuring the temperature of the heat-transfer fluid at the outlet (3) of the heat exchanger (1), configured to transmit temperature data to the microprocessor,
knowing that:
- said flow measurement and regulation device (4) is disposed in a first unit (5), intended to be mounted on the heat-transfer fluid circuit at a first point P1,
- said second temperature sensor (9) is disposed in a second unit (6), intended to be mounted on the same heat-transfer fluid circuit at a second point P2, situated downstream of said first point P1, said point P1 being situated at the inlet of said heat exchanger (1) and said point P2 being situated at the outlet of said heat exchanger (2);
**characterized in that**
- said first radio transceiver (19) and said microprocessor (18) are disposed in the first unit (5) or in a third unit (7) that is fixed to said first unit (5), and
- said second temperature sensor (9) communicates with said microprocessor (18) either by a wireless system, by means of a second radio transmitter that communicates with a receiver situated in the second unit (6), or, preferably, by a cable connection (21), and
- said electrical supply system (11) independent of the external electrical system is disposed in the second unit (6), and in this case a cable connection (21) is provided that makes it possible also to supply the first unit (5) and, if present, the third unit (7), or, preferably, in the first unit (5).

2. System according to claim 1, **characterised in that** said flow measurement device (13) is an ultrasound flow meter.

3. System according to either one of claims 1 or 2, **characterised in that** said autonomous power supply system (11) is a thermoelectric-effect system.

4. System according to any one of claims 1 to 3, **characterised in that** said member (10) for regulating the flow of the heat-transfer fluid comprises a stepping motor.

5. Radio system for the automated reading and management of heating loads, comprising:
- a plurality of systems for the individual determination of the energy consumption and individual thermal regulation of a heat exchanger according to any one of claims 1 to 4;
- a plurality of local-management boxes (23a, b), each local management box (23a, 23b) being in radio connection with all the flow measurement and regulation devices (4a-1, 4a-2, 4a-3, 4a-4; 4b-1, 4b-2, 4b-3, 4b-4, 4b-5) installed in an occupation unit, and said plurality of local-management boxes (23a, b) being installed in the same building or group of buildings;
- a data management unit (24) that is in radio connection with each flow measurement and regulation device (4a-1, 4a-2, 4a-3, 4a-4; 4b-1, 4b-2, 4b-3, 4b-4, 4b-5) installed in said building or group of buildings;
knowing that:
- each flow measurement and regulation device (4a-1, 4a-2, 4a-3, 4a-4; 4b-1, 4b-2, 4b-3, 4b-4, 4b-5) is configured to transmit, to said data management unit (24), information on the energy consumption of its heat exchanger, together with an identifier of said heat exchanger or of the occupation unit in which said heat exchanger is installed;
- each flow measurement and regulation device (4a-1, 4a-2, 4a-3, 4a-4; 4b-1, 4b-2, 4b-3, 4b-4, 4b-5) is configured to transmit, to said local-management box (23a, b) relating to its occupation unit, data relating to a temperature of said heat exchanger;
- each flow measurement and regulation device (4a-1, 4a-2, 4a-3, 4a-4; 4b-1, 4b-2, 4b-3, 4b-4, 4b-5) is configured to receive, from said local-management box (23a, b), instructions able to act on its member (10) for regulating the flow of the heat-transfer fluid.

6. Radio system according to claim 5, **characterised in that** it also comprises, in at least one occupation unit, a device for measuring the consumption of hot water (22a, b) provided with a radio transmitter, which is configured to transmit its consumption data, along with an identifier of said measurement device or of the occupation unit in which said measurement device is installed, to said data management unit (24).

7. Radio system according to claim 5 or 6, **characterised in that** it also comprises, in at least one occupation unit, a door camera (25a, b) that is configured to transmit video data to said local-management box (23a, b) of its occupation unit.

8. Radio system according to any one of claims 5 to 7, **characterised in that** it also comprises, in each building, at least one electronic door-entry system provided with an interface for selecting the occupation units, which is configured to transmit video data to a local-management box (23) selected on said selection interface.

9. Radio system according to any one of claims 5 to 8, **characterised in that** the communication between each flow measurement and regulation device (4a-1, 4a-2, 4a-3, 4a-4; 4b-1, 4b-2, 4b-3, 4b-4, 4b-5) and the data management unit (24) on the one hand, and the communication between said measurement and regulation devices and the local-management box (23) on the other hand, takes place at a different frequency zone.

10. Radio system according to any one of claims 5 to 9, **characterised in that** it comprises a boiler, the functioning of which, and in particular the useful heat that it supplies, is governed by control instructions that are transmitted to it by a microprocessor that is configured to receive data relating to the consumption of hot heat-transfer liquid and for establishing said control instructions using said data relating to the consumption of hot heat-transfer liquid.

11. Radio system according to claim 10, **characterised in that** said microprocessor forms part of said data management unit.

12. Radio system according to claim 10 or 11, **characterised in that** said microprocessor is configured to use in addition data coming from information relating to the triggering of a temperature reduction mode in the occupation units, and/or data coming from a device for measuring the outside temperature.

13. Radio system according to any one of claims 10 to 12, **characterised in that** it further comprises, for at least one occupation unit and preferably for each occupation unit,
- at least one presence detector capable of communicating, to the local-management box, information relating to the presence of an occupant,
- and/or at least one CO₂ detector capable of communicating, to the local-management box, information relating to the CO₂ concentration threshold, to the CO₂ concentration, and/or to the exceeding of a CO₂ concentration threshold;
- and/or at least one detector of volatile organic compounds (VOCs) capable of communicating, to the local-management box, information relating to the concentration of VOCs and/or to the exceeding of a VOC concentration threshold.

14. Method for regulating a boiler in a radio system according to any one of claims 10 to 13, wherein the functioning of the boiler, and in particular the useful heat that the latter supplies, is regulated by control instructions that are transmitted to it by a microprocessor that is configured to receive data relating to the consumption of hot water and to establish said control instructions using said data relating to the consumption.
